# DEMANDE DE BREVET EUROPEEN

(11) **EP 1 867 888 A2**
(43) Date de publication de la demande: **19.12.2007**
(21) Numéro de dépôt: 07301093.6
(22) Date de dépôt: 07.06.2007
(51) Int. Cl.: F16D 48/06

(54) **Système d'embrayage à commande hydraulique comportant un moyen fiable pour déterminer l'état d'embrayage**

(30) Priorité: 14.06.2006 WO PCT/FR2006/052125
(71) Demandeur: PEUGEOT CITROËN AUTOMOBILES S.A., 78140 Velizy Villacoublay (FR)
(72) Inventeur: Calmels, David, 78300 Poissy (FR); Farlin, Guillaume, 78500 Sartrouville (FR); Celisse, Arnaud, 92400 Courbevoie (FR)

(57) **Abrégé**

- Le système d'embrayage à commande hydraulique comporte un mécanisme d'embrayage (10), un mécanisme de pédale d'embrayage (20), un dispositif d'actionnement hydraulique (30) avec un récepteur (34, 35) proche du mécanisme d'embrayage (10), un émetteur (31, 33) proche du mécanisme de pédale d'embrayage (20) et une liaison hydraulique (36) reliant l'émetteur au récepteur.

- Il comporte aussi au moins un capteur de déplacement (29 ; 39 ; 49) entre le mécanisme d'embrayage (10) et le mécanisme de la pédale d'embrayage (20) et/ou sur ledit mécanisme de la pédale d'embrayage (20), et un capteur de pression (50), situé sur la liaison hydraulique (36), destiné à fiabiliser l'information sur l'état de l'embrayage donnée à l'aide du capteur de déplacement.

- Véhicules automobiles. Systèmes d'embrayage de véhicules automobiles. Systèmes d'aide à la conduite automobile.

## Description

La présente invention concerne un système d'embrayage à commande hydraulique comportant un moyen fiable pour déterminer l'état d'embrayage.

Elle concerne également un procédé de détermination de l'état d'embrayage d'un tel système d'embrayage à commande hydraulique.

Un système d'embrayage assure, à volonté, la liaison - ou la séparation- de deux arbres ou de deux organes tournants, l'un moteur et l'autre récepteur, de manière à réaliser - ou à interrompre - la transmission du mouvement et du couple d'un arbre ou organe tournant à l'autre.

Le terme « embrayage » désigne également la phase de fonctionnement où l'accouplement est établi, opération inverse du « débrayage » pendant laquelle les arbres ou, plus généralement, les organes tournants sont désolidarisés.

Un grand nombre de fonctions automobiles utilisent l'information selon laquelle l'embrayage est ouvert (pédale d'embrayage enfoncée ou basse) ou l'embrayage est fermé (pédale d'embrayage relâchée ou haute), information que l'on désignera également par l'expression « information sur l'état de l'embrayage ». C'est le cas de la fonction de démarrage moteur impulsionnel, de la fonction dite « Stop and Start » qui permet d'arrêter le moteur lorsque le véhicule est immobile, pédale de frein enfoncée, et de le redémarrer instantanément au « lâcher » de la pédale, de la fonction du dispositif limiteur et/ou régulateur de vitesse, et plus généralement des fonctions procurant un meilleur agrément moteur.

L'information sur l'état de l'embrayage doit être une information sûre et fiable. Toute défaillance sur son contenu peut avoir de graves conséquences : démarrage impulsionnel avec chaîne de traction fermée, régulation de vitesse intempestive, par exemple.

Pour connaître cette information dans un système d'embrayage à commande hydraulique, on a recours actuellement à un capteur de déplacement, placé au niveau du récepteur de la commande hydraulique, ou au niveau de l'émetteur de la commande hydraulique ou bien encore au niveau de la pédale ou du pédalier.

Toutefois, si le capteur de déplacement est situé sur la pédale ou sur le pédalier, en cas de défaillance de la commande hydraulique d'embrayage entre l'émetteur et le récepteur, l'information sur l'état de l'embrayage est erronée. Par exemple, dans ce cas, la pédale peut être en position débrayée et détectée en position débrayée, tandis que l'embrayage est toujours fermé.

Dans les solutions connues de l'art antérieur, on connaît aussi, selon la publication de demande de brevet français n° 2 678 034, un système pour déterminer l'état d'usure d'un embrayage à friction de véhicule automobile et/ou pour mesurer la course d'un organe de désembrayage de l'embrayage, ledit embrayage étant susceptible d'être actionné à partir d'un maître cylindre et d'un cylindre récepteur. Dans ce système, un capteur de déplacement est uni au cylindre récepteur en formant un ensemble de construction. Le capteur de déplacement, dans ce cas, n'est que peu influencé par les tolérances du système de désembrayage.

Toutefois, l'information sur l'état de l'embrayage n'est supportée que par un seul capteur, et les diagnostics de cette information ne couvrent pas toutes les situations de vie ; le temps d'exposition au risque de défaillance de l'information point mort non diagnostiquée restant important.

Le but de la présente invention est d'obvier aux inconvénients des solutions techniques de détermination de l'état de l'embrayage connues de l'art antérieur.

Un autre but de la présente invention est de concevoir un système d'embrayage à commande hydraulique comportant un moyen de grande fiabilité pour déterminer l'état d'embrayage.

C'est également un but de la présente invention de concevoir un procédé de détermination de l'état d'embrayage d'un système d'embrayage à commande hydraulique, qui soit de la plus grande fiabilité possible.

C'est aussi un but de la présente invention de fournir un système d'embrayage à commande hydraulique comportant un moyen de détermination de l'état d'embrayage, qui soit de fabrication et de montage simple, et par conséquent économique.

Pour atteindre ces buts, la présente invention réalise un nouveau système d'embrayage à commande hydraulique, qui comporte un mécanisme d'embrayage, un dispositif d'actionnement hydraulique avec un récepteur proche du mécanisme d'embrayage, un émetteur proche du mécanisme de la pédale d'embrayage et une liaison hydraulique reliant l'émetteur au récepteur, au moins un capteur de déplacement situé entre le mécanisme d'embrayage et le mécanisme de la pédale d'embrayage et/ou sur ledit mécanisme de la pédale d'embrayage, et un capteur de pression situé sur ladite liaison hydraulique. Le capteur de pression est destiné à fiabiliser l'information sur l'état de l'embrayage obtenue au moyen du capteur de déplacement.

Le capteur de déplacement peut être situé sur l'émetteur du dispositif d'actionnement hydraulique, et/ou sur le récepteur du dispositif d'actionnement hydraulique, et/ou sur le mécanisme de la pédale d'embrayage.

Lorsque le capteur de déplacement est disposé sur le cylindre de l'émetteur, il mesure le déplacement du piston de l'émetteur, et par conséquent le déplacement de la pédale d'embrayage.

Lorsque le capteur de déplacement est disposé sur le cylindre du récepteur, il mesure le déplacement du piston dudit récepteur, et par conséquent le déplacement de la fourchette d'embrayage.

La présente invention conçoit également un nouveau procédé de détermination de l'état d'embrayage d'un système d'embrayage à commande hydraulique ayant un dispositif d'actionnement hydraulique avec un récepteur proche du mécanisme d'embrayage, un émetteur proche du mécanisme de pédale d'embrayage et une liaison hydraulique reliant l'émetteur au récepteur. Ce nouveau procédé comporte les étapes suivantes :
- mesure du déplacement de la pédale d'embrayage au moyen d'un capteur de déplacement,
- mesure de la pression dans la liaison hydraulique au moyen d'un capteur de pression,
- test de cohérence entre les deux mesures permettant de valider ou invalider l'état d'embrayage obtenu à l'aide dudit capteur de déplacement.

De préférence, la mesure du déplacement de la pédale d'embrayage est réalisée par un capteur de déplacement situé sur le pédalier ou sur la pédale.

La mesure du déplacement peut être réalisée, en variante ou en complément, au moyen d'un capteur de déplacement situé sur l'émetteur du dispositif d'actionnement hydraulique.

La mesure du déplacement peut également être réalisée, en variante ou en complément, au moyen d'un capteur de déplacement situé sur le récepteur du dispositif d'actionnement hydraulique.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels:
- la figure 1 est un schéma fonctionnel d'un système d'embrayage à commande hydraulique, selon la présente invention,
- la figure 2 est un graphe de la loi liant la pression au déplacement dans un système d'embrayage à commande hydraulique, et
- la figure 3 est un graphe semblable à celui de la figure 2, pour illustrer le procédé de la présente invention.

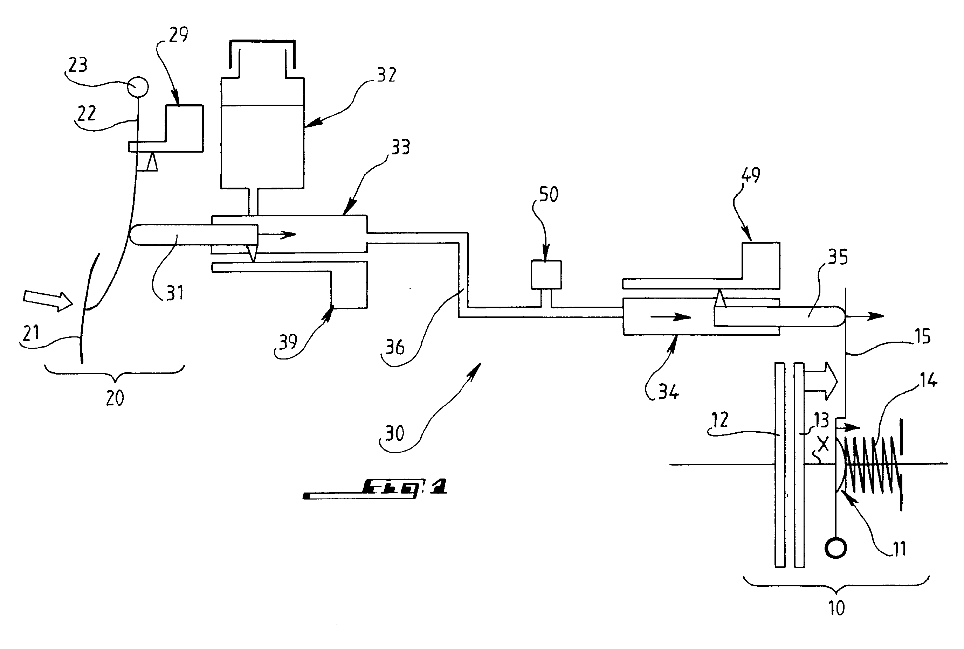

Sur le dessin de la figure 1, on a représenté, de manière schématique, un système d'embrayage qui comprend un mécanisme d'embrayage à friction, de référence générale 10, un mécanisme de pédale d'embrayage, de référence générale 20, et un dispositif d'actionnement hydraulique, de référence générale 30, situé entre le mécanisme d'embrayage à friction 10 et le mécanisme de pédale d'embrayage 20. Le mécanisme d'embrayage à friction 10 comporte, de manière classique, une butée d'embrayage 11, solidaire d'une fourchette d'embrayage 15, qui peut être actionnée par le dispositif d'actionnement hydraulique 30 pour écarter les deux plateaux d'embrayage, 12 et 13, et « ouvrir » l'embrayage. Dans l'état dit « d'ouverture de l'embrayage », les plateaux 12 et 13 sont écartés, le disque de friction de l'embrayage est libéré, le mouvement n'est plus transmis entre l'arbre moteur et l'arbre récepteur : la boîte de vitesse du véhicule est rendue indépendante du moteur.

L'état d'ouverture de l'embrayage est obtenu en appuyant, avec une force illustrée par la flèche située à gauche sur la figure 1, sur la pédale d'embrayage 21, liée au pédalier 22. Le pédalier 22 est déplaçable en rotation autour de l'axe 23 sous l'action exercée sur la pédale 21, et agit par ce mouvement de rotation contre la partie mobile ou piston 31 d'un premier cylindre du dispositif d'actionnement hydraulique 30, de façon à actionner la fourchette 15 de l'embrayage et, par conséquent déplacer la butée d'embrayage 11 contre l'action d'un ressort 14 de maintien des disques d'embrayage en contact. Par conséquent, le dispositif d'actionnement hydraulique 30 transforme le mouvement exercé sur la pédale 21 en un mouvement de translation, illustré par la flèche située à droite sur la figure 1, sur la butée d'embrayage 11.

Le dispositif d'actionnement hydraulique - ou actionneur hydraulique - 30 se compose d'un réservoir hydraulique 32, d'un cylindre émetteur 33, proche du mécanisme de pédale d'embrayage 20, avec sa partie mobile 31, d'un cylindre récepteur 34, proche du mécanisme d'embrayage 10, avec une partie mobile 35, et d'une liaison hydraulique 36 qui relie le cylindre émetteur 33 au cylindre récepteur 34.

En partant de la pédale d'embrayage 21, il est produit une sollicitation directe sur le piston 31 du cylindre émetteur 33, relié, par la conduite de pression 36, au cylindre récepteur 34. La sollicitation se traduit par une pression dans le cylindre récepteur 34, qui actionne le mouvement du piston 35 du cylindre récepteur 34. Ce mouvement du piston 35 produit une sollicitation sur la fourchette d'embrayage 15 agissant directement sur la butée d'embrayage 11 disposée concentriquement à un arbre de boîte de vitesses, et montée à rotation autour d'un axe X solidaire de la boîte de vitesses. Le cylindre émetteur 33, le cylindre récepteur 34, la conduite de pression 36, et en partie le réservoir 32, sont remplis, de préférence, avec un liquide hydraulique, pratiquement incompressible. Ainsi, on obtient une transmission sans perte de la force, depuis la pédale d'embrayage 21 jusqu'à la butée d'embrayage 11. Quand on actionne la pédale d'embrayage 21, cette dernière est pivotée dans le sens inverse des aiguilles d'une montre autour de l'axe de rotation 23, ce qui provoque le déplacement du piston 31 situé dans le cylindre émetteur 33. Le mouvement du piston 31 déplace le fluide d'actionnement dans la conduite de pression 36, lequel déplace le piston 35 du cylindre récepteur 34. Le mouvement du piston 35 fait pivoter la fourchette d'embrayage 15, ce qui a pour résultat que la butée d'embrayage 11 relâche l'embrayage à friction. Quand on relâche la pédale d'embrayage 21, les déplacements se font en sens inverse.

Pour connaître l'état de l'embrayage, c'est-à-dire pour savoir si l'embrayage est ouvert ou fermé, on peut placer un dispositif de mesure de déplacement, plus précisément un capteur de déplacement, au niveau du cylindre récepteur 34 du dispositif d'actionnement hydraulique, ou au niveau du cylindre émetteur 33 du dispositif d'actionnement hydraulique, ou au niveau du pédalier 22. On a représenté ces trois possibilités par les références 49, 39 et 29, respectivement.

Ces capteurs de déplacement sont, toutefois, insuffisants pour assurer une réelle fiabilité de la mesure de l'état de l'embrayage.

Ainsi, par exemple, si le capteur de déplacement est situé sur la pédale d'embrayage ou sur le pédalier (capteur de déplacement 29), l'existence d'une défaillance du dispositif d'actionnement hydraulique 30 entre le cylindre émetteur 33 et le cylindre récepteur 34 fausse l'information sur l'état de l'embrayage ; la pédale d'embrayage 21 peut être en position débrayée et détectée en position débrayée, alors que l'embrayage est toujours en position fermée.

D'autre part, dans le cas où l'embrayage est pourvu d'un capteur de déplacement, comme il vient d'être indiqué, l'information sur l'état de l'embrayage n'est supportée que par un seul dispositif de mesure, et les diagnostics de cette information ne couvrent pas toutes les situations de vie (temps d'exposition au risque de défaillance de l'information point mort non diagnostiquée important).

Pour ces raisons, selon le principe de la présente invention, il est prévu un capteur de pression 50, intégré à la conduite de pression hydraulique 36.

Ce capteur de pression 50 permet de confirmer l'état « ouvert » de la chaîne de traction, lorsqu'une information sur l'état de l'embrayage a été donnée par un capteur de déplacement 29, 39 ou 49.

Il permet également de diagnostiquer l'information sur l'état de l'embrayage donnée par un capteur de déplacement en réalisant un véritable test de cohérence avec la mesure de pression, et de fiabiliser de cette façon ladite information sur l'état de l'embrayage.

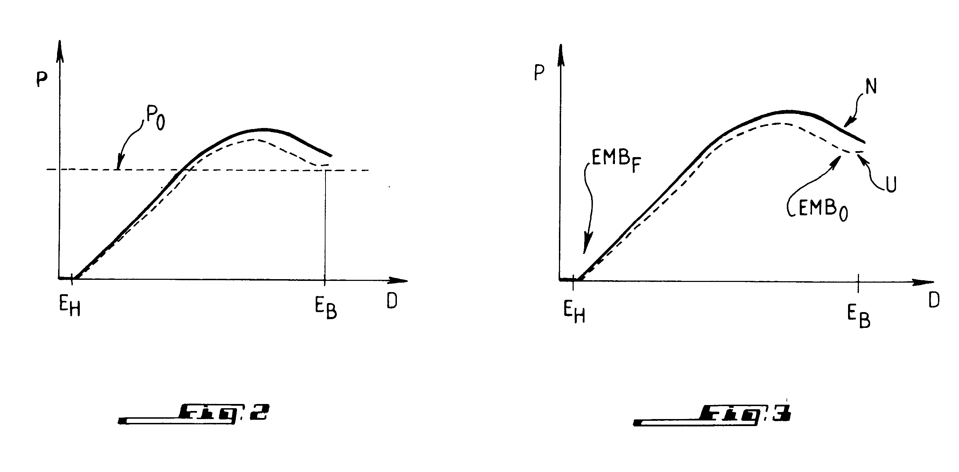

On a représenté sur le graphe de la figure 2 la relation entre la pression hydraulique P dans la conduite de pression hydraulique 36 et le déplacement D du cylindre émetteur 31 sous l'action du mouvement de la pédale 21 entre une position E_{H} dans laquelle la pédale d'embrayage est en position haute (position embrayée) et une position basse E_{B} dans laquelle la pédale d'embrayage est en position basse (position débrayée).

L'intérêt du capteur de pression 50 sera mieux compris dans la description ci-après d'un premier exemple de dysfonctionnement du dispositif d'actionnement hydraulique 30. En cas de rupture de la commande hydraulique, le capteur de déplacement, situé sur la pédale ou le pédalier (capteur 29) ou sur le cylindre émetteur 31 (capteur 39), peut détecter une position « pédale basse » et, par conséquent renvoyer l'information « embrayage ouvert » alors que l'embrayage est au contraire « fermé » parce que la pression hydraulique du fait de la rupture est insuffisante pour actionner le piston 35 du cylindre récepteur 34 . C'est dans un tel cas que s'avère utile l'information donnée par le capteur de pression 50 : en effet, le capteur de pression 50, selon la présente invention, détecte une valeur de pression trop faible, incompatible avec un état « embrayage ouvert ». L'information du capteur de pression 50, dans une telle situation, invalide l'information « embrayage ouvert » du capteur de déplacement 29 et/ou du capteur de déplacement 39. Sur le graphe de la figure 2, on a représenté par la ligne P₀ le seuil de pression en deçà duquel l'information « embrayage ouvert » ne peut être valide, car la pression est insuffisante pour actionner le récepteur hydraulique, comme mentionné précédemment. Ainsi, tout l'espace situé en dessous de la ligne P₀ est une zone de valeurs de pression « embrayage ouvert » invalide.

On a représenté sur le graphe de la figure 3 la même relation entre la pression hydraulique P, mesurée par le capteur de pression 50, et le déplacement D du piston du cylindre émetteur, c'est-à-dire le déplacement D de la pédale d'embrayage entre la position E_{H} de pédale haute et la position E_{B} de pédale basse.

Cette relation P = f(D) entre la pression P et le déplacement D de la pédale d'embrayage est une relation connue à partir des caractéristiques techniques du dispositif d'actionnement hydraulique 30 ou par apprentissage, et peu sensible à l'usure du fait de l'existence d'un système de rattrapage d'usure. Ainsi, les deux courbes, désignées N et U, représentent respectivement la relation dite nominale (en trait plein continu) et la relation à organe de friction usé (en traits interrompus courts), et ces deux courbes sont relativement proches l'une de l'autre. Par EMB_{F} et EMB₀, on a désigné les zones qui correspondent à l'embrayage fermé et à l'embrayage ouvert, respectivement.

La relation connue de la figure 3 permet de tester la cohérence des signaux des capteurs qui mesurent le déplacement de la pédale d'embrayage avec les signaux du capteur de pression 50 de l'invention.

Si la pression hydraulique mesurée P par le capteur de pression 50 est située, pour un déplacement donné, entre les deux courbes N et U, alors le test dit de cohérence est « positif » : l'information donnée par le capteur de déplacement est valide.

A contrario, si la pression hydraulique mesurée P par le capteur de pression 50 est située, pour un déplacement donné, hors de la zone comprise entre les deux courbes N et U, alors le test dit de cohérence est « négatif » : l'information donnée par le capteur de déplacement est invalidée.

De cette manière, on a réalisé un système de grande fiabilité dans la détermination de l'état d'embrayage. L'information « état d'embrayage » est sûre, et peut être utilisée en toute sécurité dans les systèmes dits « intelligents » de commande et d'assistance à la conduite automobile.

## Revendications

1. Système d'embrayage à commande hydraulique, qui comporte un mécanisme d'embrayage (10), un dispositif d'actionnement hydraulique (30) avec un récepteur (34, 35) proche du mécanisme d'embrayage (10), un émetteur (31, 33) proche du mécanisme de la pédale d'embrayage (20) et une liaison hydraulique (36) reliant l'émetteur au récepteur, et au moins un capteur de déplacement (29 ; 39 ; 49) situé entre le mécanisme d'embrayage (10) et le mécanisme de la pédale d'embrayage (20) et/ou sur ledit mécanisme de la pédale d'embrayage, **caractérisé en ce qu'**il est prévu, de plus, un capteur de pression (50), situé sur ladite liaison hydraulique (36), destiné à fiabiliser l'information sur l'état de l'embrayage obtenue au moyen dudit capteur de déplacement.

2. Système d'embrayage selon la revendication 1, **caractérisé en ce que** ledit capteur de déplacement (39) est situé sur l'émetteur (31, 33) du dispositif d'actionnement hydraulique (30).

3. Système d'embrayage selon la revendication 1, **caractérisé en ce que** ledit capteur de déplacement (49) est situé sur le récepteur (34, 35) du dispositif d'actionnement hydraulique (30).

4. Système d'embrayage selon la revendication 1, **caractérisé en ce que** ledit capteur de déplacement (29) est situé sur le pédalier (22) du mécanisme de la pédale d'embrayage (20).

5. Système d'embrayage selon la revendication 2, **caractérisé en ce que** ledit capteur de déplacement (39) est disposé sur le cylindre (33) de l'émetteur, et mesure le déplacement du piston (31) dudit émetteur.

6. Système d'embrayage selon la revendication 3, **caractérisé en ce que** ledit capteur de déplacement (49) est disposé sur le cylindre (34) du récepteur et mesure le déplacement du piston (35) dudit récepteur.

7. Procédé de détermination de l'état d'embrayage d'un système d'embrayage à commande hydraulique ayant un dispositif d'actionnement hydraulique (30) avec un récepteur (34, 35) proche du mécanisme d'embrayage (10), un émetteur (31, 33) proche du mécanisme de pédale d'embrayage (20) et une liaison hydraulique (36) reliant l'émetteur au récepteur, **caractérisé par** les étapes suivantes prises en combinaison .
- mesure du déplacement du mécanisme de la pédale d'embrayage (20) et/ou du mécanisme d'embrayage (10) au moyen d'un capteur de déplacement (29 ; 39 ; 49),
- mesure de la pression dans la liaison hydraulique (36) au moyen d'un capteur de pression (50),
- test de cohérence entre les deux mesures permettant de valider ou invalider l'état d'embrayage obtenu à l'aide dudit capteur de déplacement.

8. Procédé selon la revendication 7, **caractérisé en ce que** ladite mesure du déplacement du mécanisme de la pédale d'embrayage (20) est réalisée par un capteur de déplacement (29) situé sur la pédale (21) ou le pédalier (22).

9. Procédé selon la revendication 7, **caractérisé en ce que** ladite mesure du déplacement est réalisée au moyen d'un capteur de déplacement (39) situé sur l'émetteur (31, 33) du dispositif d'actionnement hydraulique (30).

10. Procédé selon la revendication 7, **caractérisé en ce que** ladite mesure du déplacement est réalisée au moyen d'un capteur de déplacement (49) situé sur le récepteur (34, 35) du dispositif d'actionnement hydraulique (30).
